Europäisches Patentamt

European Patent Office

Office européen des brevets

(11) Veröffentlichungsnummer: **0 311 755**
**A2**

## (12) EUROPÄISCHE PATENTANMELDUNG

(21) Anmeldenummer: **88111369.0**

(22) Anmeldetag: **15.07.88**

(51) Int. Cl.⁴: **G01G 23/37**

(30) Priorität: **16.10.87 DE 3735036**

(43) Veröffentlichungstag der Anmeldung:
**19.04.89 Patentblatt 89/16**

(84) Benannte Vertragsstaaten:
**ES FR GB IT SE**

(71) Anmelder: **SOEHNLE-WAAGEN GMBH & CO.**
**Fornsbacher Strasse 27-35**
**D-7157 Murrhardt(DE)**

(72) Erfinder: **Stahl, Albrecht, Dipl.-Ing. (FH)**
**Uferstrasse 14**
**D-7158 Sulzbach(DE)**

(74) Vertreter: **Dreiss, Hosenthien & Fuhlendorf**
**Gerokstrasse 6**
**D-7000 Stuttgart 1(DE)**

(54) **Digitale Waage.**

(57) Die Erfindung betrifft eine digitale Waage, bei der das analoge Ausgangssignal einer Wägezelle (1) in einem Analog/Digital-Wandler (6) in ein digitales Signal umgewandelt wird und an einen Mikroprozessor (9) gelangt, der es mit einem Nullwert vergleicht, aus dem Vergleich das anzuzeigende Gewicht ableitet und in einer Anzeigeeinrichtung (11) zur Anzeige bringt. Ein Taktgeber (4) schaltet in regelmäßigen Zeitabständen die Wägezelle (1) ein und speichert das dabei empfangene Ausgangssignal der Wägezelle (1) abwechselnd in zwei Speichern ($C_1$, $C_2$). Das jeweils zuletzt ermittelte und in dem einen Speicher gespeicherte Ausgangssignal wird mit dem einen Zeitabstand zuvor ermittelten und in dem anderen Speicher gespeicherten Ausgangssignal verglichen, und, falls der Unterschied eine vorbestimmte Schwelle überschreitet, in der Anzeigeeinrichtung (11) angezeigt.

FIG. 1

## Digitale Waage

Die Erfindung betrifft eine digitale Waage, bei der das analoge Ausgangssignal einer Wägezelle in einem Analog/Digital-Wandler in ein digitales Signal umgewandelt wird und an einen Mikroprozessor gelangt, der es mit einem Nullwert vergleicht, aus dem Vergleich das anzuzeigende Gewicht ableitet und in einer Anzeigeeinrichtung zur Anzeige bringt, und bei der der Nullwert nach Einschalten der Wägezelle bei unbelasteter Wägezelle vor dem Wägevorgang bestimmt wird. Derartige Waagen sind bekannt.

Bevor eine Person sich für den Wägevorgang auf die Waage stellt, muß sie mittels eines Schalters die Waage einschalten. Dies kann durch einen mit dem Fuß zu betätigenden Schalter an der Stirnseite der Waage oder durch kurzzeitige Belastung der Waage geschehen. Die Waage muß im letztgenannten Fall jedoch zunächst ohne Wägevorgang wieder entlastet werden. Ist die Waage eingeschaltet, aber noch entlastet - also noch vor dem eigentlichen Wägevorgang -, so wird zunächst der zur Auswertung erforderliche "Nullwert" ermittelt, d.h. der Wert, der dem Ausgangssignal der Wägezelle im unbelasten Zustand zuzuordnen ist. Dann wird der Nullwert, z.B. als 0000, angezeigt. Dann erst kann der eigentliche Wägevorgang beginnen. Von dem dann ermittelten Wert wird der Nullwert abgezogen., Der Unterschied wird vom Mikroprozessor umgesetzt und als Gewicht zur Anzeige gebracht.

Nachteilig bei diesen bekannten digitalen Waagen ist, daß zunächst ein Einschaltvorgang erfolgen muß und daß man anschließend eine gewisse Zeit, z.B. ein oder zwei Sekunden warten muß , bevor man sich wägen kann. Andererseits ist dieser Einschaltvorgang zur Nullwertbestimmung vor dem Wägen erforderlich, da die Wägezelle und der Mikroprozessor sonst durch dauernden Stromverbrauch (Wägezelle 3 mA, Mikroprozessor 0,5 - 1 mA, bei 3 V) zu schnell die Batterien verbrauchen würden.

Es ist es Aufgabe der vorliegenden Erfindung, eine digitale Waage der Eingangs bezeichneten Art so auszubilden, daß sie ohne einen vor der Wägung vorzunehmenden Einschaltvorgang und Wartezeit zur Bildung des Nullwertes sofort belastet und das Gewicht sofort zu Anzeige gebracht werden kann. Anders ausgedrückt: Eine digitale Waage soll hinsichtlich der Eigenschaften sofortige Belastbarkeit, sofortige Anzeige den Komfort einer Analogwaage haben, ohne jedoch manuell vor dem Wägen auf Null stellen zu müssen.

Erfindungsgemäß wird diese Aufgabe dadurch gelöst, daß ein Taktgeber in regelmäßigen Zeitabständen die Wägezelle einschaltet, daß das dabei empfangene Ausgangssignal der Wägezelle abwechselnd in zwei Speichern gespeichert wird, daß das jeweils zuletzt ermittelte und in dem einen Speicher gespeicherte Ausgangssignal mit dem einen Zeitabstand zuvor ermittelten und in dem anderen Speicher gespeicherten Ausgangssignal verglichen wird, und daß, falls der Unterschied eine vorbestimmte Schwelle überschreitet, das diesen Unterschied darstellende Signal an den Mikroprozessor gelangt und der von ihm dargestellte Wert in der Anzeigeeinrichtung angezeigt wird.

Eine weitere Lösung der genannten Aufgabe sieht vor, daß ein Taktgeber in regelmäßigen Zeitabständen die Wägezelle und den Mikroprozessor einschaltet, daß der aus dem dabei empfangenen Ausgangssignal der Wägezelle ermittelte Wert im Arbeitsspeicher des Mikroprozessors gespeichert wird, daß beim Wiegevorgang der Schalter geschlossen wird und der dabei von Wägezelle und Mikrokomputer ermittelte Wert mit dem zuletzt bei einem vom Taktgeber ausgelösten Schaltvorgang ermittelten Wert verglichen wird, und der Unterschied in der Anzeigeeinrichtung angezeigt wird.

Die gemäß der Erfindung geschaffene Lösung sieht also ein Tasten der stromverbrauchenden Schaltungsteile (Wägezelle, ggf. einschl. Mikroprozessor) durch einen Taktgeber in regelmäßigen Abständen vor, wobei jeweils der aktuelle Wert als der eigentliche Meßwert und der ein Zeitabstand früher gemessene Wert bzw. der zuletzt davor gemessene Wert als Nullwert behandelt wird. Ein brauchbarer "Nullpunkt" steht also stets gespeichert zur Verfügung. Die stromverbrauchenden Schaltungseinheiten brauchen also nicht dauernd, sondern nur während der kurzzeitigen Tastungen mit Strom versorgt werden.

Gleichzeitig ergeben sich folgende Vorteile: Der bei bekannten digitalen Waagen durch den Fuß zu betätigende "EIN"-Schalter fällt weg. Die vorgesehene Schaltung ist als für diesen Anwandungszweck spezifische Schaltung (kundenspezifische Schaltung) ausführbar und damit integrierbar. Beides führt zu Kosteneinsparungen. Durch WEgfall des "EIN"-Schalters wird die Zuverlässigkeit erhöht.

Ausführungsbeispiele der Erfindung und ihrer vorteilhaften Weiterbildungen werden im folgenden anhand der beigefügten Zeichnungen beschrieben. Es stellen dar:

Figur 1 ein erstes Ausführungsbeispiel
Figur 2 ein zweites Ausführungsbeispiel

Die Schaltpläne sind lediglich schematisch zu verstehen, nicht im Sinne vollständiger Stromlaufpläne. Die Wägezelle 1 wird über Leitung 12 mit Strom versorgt und gibt über die Leitung 2 an die Anpaßschaltung 3 ein analoges Ausgangssignal ab. Die Anspaßschaltung 3 weist einen Taktgeber 4, einen Vergleicher 5 und einen Analog/Digital-Konverter 6 auf. Der Taktgeber 4 ist dauernd in Betrieb. Er legt in regelmäßigen Zeitabständen von ca. 1 Sekunde kurzzeitig, ca. 2-10 ms lang die Leitung 12 an Spannung, stellt also die Verbindung der Wägezelle 1 mit der Stromversorgung her. Er schließt ferner in denselben Zeitabständen abwechselnd die Schalter $S_1$ und $S_2$. Ist der Schalter $S_1$ geschlossen, so wird über die Leitung 2 die Kapazität $C_1$ mit dem Ausgangssignal der Wägezelle 1 beaufschlagt und speichert somit dem entsprechenden Spannungswert; ist der Schalter $S_2$ geschlossen, so wird über die Leitung 2 die Kapazität $C_2$ mit dem Ausgangssignal der Wägezelle 1 beaufschlagt und speichert somit dann in $C_2$ den entsprechenden Spannungswert. $C_1$ und $C_2$ liegen an den Eingängen $5'$ bzw. $5''$ des Vergleichers 5.

Es wird also z.B. im Zeitpunkt $t_1$ der Schalter $S_1$ geschlossen und das Ausgangssignal in $C_1$ gespeichert, im folgenden Zeitpunkt $t_2$ wird $S_2$ geschlossen und das Ausgangssignal in $C_2$ gespeichert. Im nächsten Zeitpunkt $t_3$ wird das Ausgangssignal wieder in $C_1$ gespeichert, usw.:

Insgesamt ergibt sich daraus: An einer der Kapazitäten $C_1$, $C_2$ liegt jeweils eine Spannung, die dem zuletzt gemessenen Wert des analogen Ausgangssignals der Wägezelle 1 entspricht, während stets an der anderen der Kapazitäten eine Spannung anliegt, die gleich dem Wert des analogen Ausgangssignals der Wägezelle 1 einen Zeitabstand früher ist. Ist also $t_i$ der aktuelle Zeitpunkt einer Messung, so liegen stets die Meßwerte im Zeitunkt $t_i$ und $t_{i-1}$ vor. $C_1$ und $C_2$ haben hier die Funktion analoger Speicher.

Beide Werte liegen an den Eingängen $5'$, $5''$ des Vergleichers 5 an und werden miteinander verglichen, d.h. wenn keine Wägung stattgefunden hat, werden die Werte an den Eingängen $5'$ und 5, $5''$ gleich oder - im Rahmen kurzzeitiger geringer Veränderung durch Umgebungseinflüsse oder Standortwechsel - etwa gleich sein. Es geschieht dann nichts weiter.

Ergibt sich bei einem Vergleich im Vergleicher 5 jedoch eine eine bestimmte einstellbare oder programmierbare Schwelle überschreitende Differenz, so wird dies als Zeichen dafür gewertet, daß eine Belastung der Wägezelle 1, also ein Wägevorgang eingeleitet wurde. Das Ausgangssignal der Wägezelle 1 im aktuellen Zeitpunkt $t_i$, mit dem die eine der Kapazitäten (z.B. $C_1$) beaufschlagt ist, wird als das sich bei der Wägung ergebende Meßsignal, das noch in der anderen Kapazität (z.B. $C_2$) gespeicherte Ausgangssignal im zuletzt vorhergegangenen Zeitpunkt $t_{i-1}$ als Nullwert interpretiert. Das der Differenz entsprechende Signal gelangt über Leitung 7 an den Analog/Digital-Wandler 6 und von dort über die Leitung 8 an die Auswerteschaltung 9. Gleichzeitig wird bei Überschreiten der erwähnten Schwelle durch ein Differenzsignal über Leitung 10 die Auswerteschaltung 9 (d.h. deren Stromversorgung) eingeschaltet, die durch einen Mikroprozessor gebildet wird, der einen Festwertspeicher ROM (Read Only Memory), einen Arbeitsspeicher RAM (Remdom Access Memory) und ein Rechenwerk CPU (Central Processing Unit) aufweist. In dem Festwertspeicher ROM ist das Arbeitsprogramm gespeichert. Die laufend anfallenden Werte werden im Arbeitsspeicher RAM gespeichert. Die Rechenoperationen werden von der Recheneinheit CPU ausgeführt. Die Auswerteschaltung 9 ermittelt aufgrund der bitseriellen Daten auf Leitung 8 am Ausgang des Analog/Digital-Wandlers 6 den zuzuordnenden Gewichtswert in dezimaler Darstellung und bringt ihn an der Anzeigeeinrichtung 11 zur Anzeige.

Der Taktgeber 4 läuft, wie bereits erwähnt, dauernd. Er braucht einen Strom von wenigen uA. Dies ist damit extrem gering, so daß der Taktgeber als einziges Element, das dauernd eingeschaltet ist, keine nennenswerte Belastung der durch eine Batterie gegebenen Stromversorgung der gesamten Schaltung darstellt. Damit kann auch der "EIN"-Schalter bekannter digitaler Waagen entfallen; dies bedeutet eine Kosteneinsparung und eine Erhöhung der Zuverlässigkeit.

Die Kapazitäten $C_1$, $C_2$ haben z.B. den Wert von 100 nF.

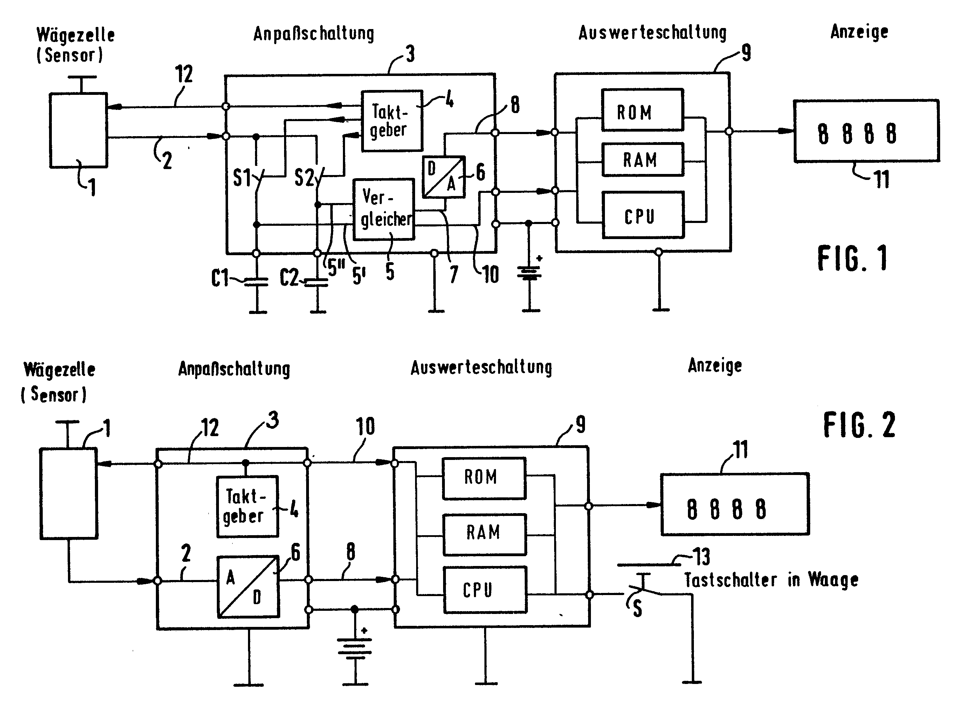

Das Ausführungsbeispiel nach Figur 2 unterscheidet sich von dem nach Figur 1 dadurch, daß die Speicherung der getasteten Meßwerte voll digital auf Programmebene im Mikroprozessor 9 erfolgt, und zwar an einem bestimmten Speicherplatz des Arbeitsspeichers RAM. Die Ablage der in den Tastzeitpunkten $t_i$ und $t_{i-1}$ ermittelten Werte erfolgt abwechselnd an zwei bestimmter Speicherplatz des Arbeitsspeichers RAM. Es ist also jeweils der zuletzt im Zeitpunkt $t_i$ getastete Meßwert gespeichert.

Der Stromverbrauch der Schaltung nach Figur 2 ist dadurch, daß jeweils auch die Auswerteschaltung 9 mit eingeschaltet wird, etwas größer als der der Schaltung nach Figur 1. Aus diesem Grunde ist es zweckmäßig, bei dieser Schaltung längere Zwischenräume zwischen zwei Tastungen vorzusehen, so bspw. Abstände von je einer Stunde. Bei einer Wägung wird daher nicht (wie in Fig. 1) die nächste Tastung durch den Taktgeber 4 abgewartet, sondern sie erfolgt durch einen Schalter S, der bei Betreten der Platte 13 betätigt wird, im Zeitpunkt eines Wägevorgangs. Damit wird eine "aktuelle" Messung veranlaßt, die dann den zeitlich "neuesten" Wert ergibt, während bei zuletzt davor bei Tastung durch Taktgeber 4 ermittelte Wert als Nullwert verwendet wird.

Bei beiden Lösungen ist der Stromverbrauch in jedem Fall so gering, daß er durch Solarzellen in Verbindung mit einem Pufferakkumulator ohne Batterie durch die Helligkeit der Umgebung bei einer Wägung bereitgestellt werden kann. Der Pufferakkumulator ist jedoch erforderlich, um über die Zeit mit keiner oder zu geringer Lichteinstrahlung Energie für die Schaltung zur Verfügung zu haben.

## Ansprüche

1. Digitale Waage, bei der das analoge Ausgangssignal einer Wägezelle (1) in einem Analog/Digital-Wandler (6) in ein digitales Signal umgewandelt wird und an einen Mikroprozessor (9) gelangt, der es mit einem Nullwert vergleicht, und aus dem Vergleich das anzuzeigende Gewicht ableitet und in einer Anzeigeeinrichtung (11) zur Anzeige bringt, und bei der der Nullwert nach Einschalten der Wägezelle (1) bei unbelasteter Wägezelle vor dem Wägevorgang bestimmt wird, dadurch gekennzeichnet, daß ein Taktgeber (4) in regelmäßigen Zeitabständen die Wägezelle (1) einschaltet, daß das dabei empfangene Ausgangssignal der Wägezelle (1) abwechselnd in zwei Speichern ($C_1$, $C_2$) gespeichert wird, daß das jeweils zuletzt ermittelte und in dem einen Speicher gespeicherte Ausgangssignal mit dem einen Zeitabstand zuvor ermittelten und in dem anderen Speicher gespeicherten Ausgangssignal verglichen wird, und, falls der Unterschied eine vorbestimmte Schwelle überschreitet, das diesen Unterschied darstellende Signal an den Mikroprozessor (9) gelangt und das von ihm dargestellte Wert in der Anzeigeeinrichtung (11) angezeigt wird.

2. Digitale Waage nach Anspruch 1 dadurch gekennzeichnet, daß die Speicher durch Kapazitäten ($C_1$, $C_2$) gebildet werden, daß jeder Kapazität ein Schalter ($S_1$, $S_2$) zugeordnet ist, und daß durch den Taktgeber (4) abwechselnd die beiden Schalter mit der das Ausgangssignal der Wägezelle (1) führenden Leitung (2) verbunden werden.

3. Digitale Waage nach Anspruch 1 dadurch gekennzeichnet, daß der Vergleicher (5) dem Analog/Digital-Wandler (6) vorgeschaltet ist, und daß der Vergleicher (5), wenn der Unterschied der zu zwei aufeinanderfolgenden Zeitpunkten gemessenen und in den beiden Speichern ($C_1$, $C_2$) gespeicherten Werte den Schwellwert überschreitet, den Mikroprozessor (9) einschaltet.

4. Digitale Waage nach Anspruch 1, dadurch gekennzeichnet, daß der zeitliche Abstand zwischen 0,5 und 10 sec, vorzugsweise 1 sec trägt.

5. Digitale Waage, bei der das analoge Ausgangssignal einer Wägezelle (1) in einem Analog/Digital-Wandler (6) in ein digitales Signal umgewandelt wird und an einen Mikroprozessor (9) gelangt, der es mit einem Nullwert vegleicht, aus dem Vergleich das anzuzeigende Gewicht ableitet und in einer Anzeigeeinrichtung (11) zur Anzeige bringt, und bei der der Nullwert nach Einschalten der Wägezelle (1) und des Mikroprozessors (9) mittels eines Schalters (S) von dem Mikroprozessor bei unbelasteter Wägezelle (1) vor dem Wiegevorgang bestimmt wird, dadurch gekennzeichnet, daß ein Taktgeber (4) in regelmäßigen Zeitabständen die Wägezelle (1) und den Mikroprozessor (9) einschaltet, daß der aus dem dabei empfangenen Ausgangssignal der Wägezelle (1) ermittelte Wert in dem Arbeitsspeicher (RAM) des Mikroprozessors (9) gespeichert wird, daß beim Wägevorgang der Schalter (S) geschlossen wird und der dabei von Wägezelle (1) und Mikrokomputer (9) ermittelte Wert mit dem zuletzt bei einem von Taktgeber (4) ausgelösten Schaltvorgang ermittelten Wert verglichen wird, und der Unterschied in der Anzeigerichtung (11) angezeigt wird.

6. Digitale Waage nach Anspruch 5, dadurch gekennzeichnet, daß der zeitliche Abstand zwischen 10 min und 100 min, vorzugsweise ca. 60 min beträgt.

7. Digitale Waage nach Anspruch 1 oder einem der folgenden, dadurch gekennzeichnet, daß zur Stromversorgung eine Solarenergiezelle mit Pufferspeicher eingesetzt ist.

Anzeige

8888

11

FIG. 1

Auswerteschaltung 9

ROM

RAM

CPU

Anpaßschaltung 3

Takt-geber 4

Ver-gleicher 5

D/A 6

8

7

10

S2 5'' 5'

S1

C2

C1

Wägezelle (Sensor) 1

12

2

FIG. 2

Anzeige

8888

11

Tastschalter in Waage 13

S

Auswerteschaltung 9

ROM

RAM

CPU

10

8

Anpaßschaltung 3

Takt-geber 4

A/D 6

12

2

Wägezelle (Sensor) 1